# EUROPÄISCHE PATENTSCHRIFT

(11) **EP 2 960 058 B1**
(45) Veröffentlichungstag und Bekanntmachung des Hinweises auf die Patenterteilung: **20.12.2017**
(21) Anmeldenummer: 15170929.2
(22) Anmeldetag: 08.06.2015
(51) Int. Cl.: B41F 33/00, B41F 33/16, G03G 15/00, G06F 3/12

(54) **VERFAHREN UND VORRICHTUNG ZUR MARKENLOSEN STEUERUNG UND REGELUNG EINES DIGITALEN DRUCKPROZESSES**
METHOD AND DEVICE FOR CONTROLLING AND REGULATING A DIGITAL PRINTING PROCESS
PROCÉDÉ ET DISPOSITIF DESTINÉS À LA COMMANDE GÉNÉRIQUE ET AU RÉGLAGE D'UN PROCESSUS D'IMPRESSION NUMÉRIQUE

(30) Priorität: 13.06.2014 DE 102014108325
(43) Veröffentlichungstag der Anmeldung: 30.12.2015
(73) Patentinhaber: manroland web systems GmbH, 86153 Augsburg (DE)
(72) Erfinder: Eisensteger, Thomas, 86169 Augsburg (DE); Elchlepp, Andreas, 86551 Aichach (DE)

(56) Entgegenhaltungen:
- DE-A1- 4 321 177
- DE-A1-102005 012 913
- DE-A1-102012 103 679
- US-A1- 2012 288 298

## Beschreibung

Die Erfindung betrifft ein Verfahren zur markenlosen Steuerung bzw. Regelung eines Produktionsprozesses bei einer Produktionseinrichtung, die den gesamten Bedruckstoff oder nur Teile davon druckformvariabel bedrucken kann, sowie eine Vorrichtung zur Ausführung des Verfahrens, gemäß den unabhängigen Patentansprüchen.

### Stand der Technik

In Druckereien werden Produktionseinrichtungen eingesetzt, die einen vorgegebenen Druckauftrag vollständig ausführen können. Dies umfasst das Drucken des Auftrags ebenso wie die Weiterverarbeitung zu dem fertigen Produkt, z.B. einen aus einem einzigen Blatt bestehenden Werbe-Flyer bis hin zu einem vollständig gebundenen Buch. Ferner kann auch ein Logistiksystem an die Produktionseinrichtungen angeschlossen sein. Folglich umfasst der Begriff Produktionseinrichtung nicht nur die Druckvorrichtung und eine oder mehrere Weiterverarbeitungseinrichtungen, die ein Endprodukt herstellen, sondern kann auch ein Logistiksystem umfassen, das weitere Prozesse durchführt, die nach der Erstellung des Endproduktes anfallen.

Es ist zu beobachten, dass zunehmend Produktionseinrichtungen eingesetzt werden, bei denen als Druckeinrichtung Digitaldruckmaschinen verwendet werden, welche sich im Vergleich zu herkömmlichen Offsetdruckmaschinen insbesondere dafür eignen, eine Vielzahl wechselnder und unterschiedlicher Druckaufträge zu bearbeiten, d.h. grundsätzlich jedes einzelne Druckexemplar unterschiedlich drucken können, da sie bei jedem einzelnen Druckvorgang das Bild neu aufbauen. Diese Produktionseinrichtungen werden als druckformvariable Produktionseinrichtungen oder Digitaldruckmaschinen bezeichnet. Auch gibt es die Kombination einer nicht druckformvariablen Druckmaschine, z.B. einer Offsetdruckmaschine, mit einer druckformvariablen Druckmaschine. Da bei solchen Vorrichtungen zumindest ein Teil des Bildes druckformvariabel ist, fallen diese Vorrichtungen ebenfalls unter den Begriff druckformvariabel.

Aus der DE 10 2005 012 913 A1 ist eine Offset-Druckmaschine bekannt, bei welcher anhand eines geschaffenen Stellgliedes Parameter in der Form gesteuert werden können, dass die Qualität des Druckes einstellbar und auf dem eingestellten Niveau im Fortdruck stabil haltbar ist. Hierzu kommt als Erfassungseinrichtung ein Inspektionssystem zum Einsatz, welches zur Ermittlung beispielsweise von farbmetrischen Daten, von Farbtönen aber auch des Farbregisters oder des Seitenregisters geeignet ist.

Die US 2012/0 288 298 A1 offenbart eine Vorrichtung zur Regelung bzw. Kontrolle einer Vielzahl von Druckaufträgen zur Produktion von Fotobüchern, wobei hierfür die Job-Identifizierung anhand von hinterlegten und mitgedruckten Barcodes erfolgt, um so die erfolgreiche Produktion bzw. das Nachdrucken von unvollständigen Exemplaren tracken zu können.

Die DE 43 21 177 A1 lehrt eine Vorrichtung zur Bildinspektion und Farbmessung an mindestens einem mittels einer Offset-Druckmaschine hergestellten Druckproduktes, so dass eine simultane Qualitäts- und Farbbewertung möglich ist. Hierfür werden zur Bildinspektion alle sich zyklisch wiederholenden Bilddaten des Druckproduktes herangezogen, während zur Farbregelung nur repräsentative Bereiche erfasst werden. Dadurch können nicht tolerierbare Farbfehler erkannt und die entsprechenden Produkte ausgeschleust werden.

Aus der Praxis ist bereits bekannt, dass eine Digitaldruckmaschine ein Produktionsplanungs- und Produktionssteuerungssystem, also z.B. ein Digitaldruckplanungsmodul und einen Druckmaschinenrechner, umfasst, um das Drucken von Druckaufträgen auf der Digitaldruckmaschine zu planen und zu steuern.

Weiterhin ist bekannt, dass in einer Druckvorstufe, d. h. in einer dem eigentlichen maschinellen Druckvorgang vorgelagerten Produktionsstufe, erforderliche Informationen - nämlich sogenannte Druckdaten - bereits passend zu den vorgegebenen maschinellen Druckbedingungen und dem vorgegebenen Druckverfahren aufbereitet und die Flächendeckungen und Farben in einem digitalen Datenbestand entsprechend festgelegt werden. Auf Grundlage dieser Daten wird der Druckvorgang dann in einer Druckmaschine, wie beispielsweise einer Inkjetdruckeinrichtung oder einer Laserdruckeinrichtung, durchgeführt und während der Druckproduktion werden diese digitalen Druckdaten nicht mehr verändert. Bei Digitaldruckmaschinen werden diese Daten digital als digitale Druckdaten oder Bebilderungsdaten gespeichert und können während des gesamten Produktionsvorgangs der Produktionseinrichtung zur Verfügung gestellt werden bzw. davon abgerufen werden.

Des Weiteren ist bekannt, dass die Daten des dem Fachmann bekannten sogenannten Ausschießers ebenfalls in dem Produktionsplanungs- und Produktionssteuerungssystem in einem passenden Format für die Weiterverarbeitung hinterlegt bzw. gespeichert werden können.

Ferner können sogenannte Produktstrukturdaten bereitgestellt und gespeichert werden. Unter Produktstrukturdaten sind die Daten zu verstehen, die im Wesentlichen den logischen und formatbezogenen, d. h. größenbezogenen Aufbau des Produkts, das aus dem entsprechenden Auftrag resultiert, definieren. Unter logischem Aufbau des Produkts ist insbesondere zu verstehen, wie das Produkt beschaffen ist, d.h. welches Format es aufweist, welche Buchstruktur, mit welcher Seitenzahl, mit welchen Sammelvorgängen, welche Falzvarianten als auch welche weiteren Nachverarbeitungsschritte wie Beschnitt, Aufsammeln, mit anderen Sektionen zu Buchblöcken zusammenführen etc., d. h. welche Schritte bei der Verarbeitung erfolgen müssen, um das gewünschte Produkt zu erhalten etc., also welche Steueraktionen bei der Weiterverarbeitungsmaschine benötigt werden. Ferner können noch Inhalt, Personalisierungen des Produktes, sowie Logistikinformationen und kaufmännische Informationen gemäß dem Auftrag unter diesen Begriff fallen.

Außer den oben explizit erwähnten Produktdaten, also den digitalen Druckdaten bzw. Bebilderungsdaten, dem Ausschießer und/oder den Produktstrukturdaten können sämtliche weitere für das Ausführen eines Auftrags oder für die Steuerung bzw. Regelung der Produktionseinrichtung benötigte Produktdaten bereitgestellt werden.

Die Produktdaten werden bevorzugt in einer Speichereinrichtung gespeichert, sind aber nicht darauf beschränkt. Die Produktdaten können in einem Format bereitgestellt werden, das direkt verwendet werden kann, oder in ein geeignetes Format umgewandelt werden kann. Die Verwendung von Speichereinrichtungen im Bereich der Druckmaschinen ist bekannt. Eine Speichereinrichtung gemäß der vorliegenden Erfindung kann jegliche Einrichtung zum Speichern von Informationen umfassen. Die Speichereinrichtung kann in einer der Produktionseinrichtungen integriert sein oder anderweitig zur Verfügung stehen, beispielsweise über einen Netzwerkanschluss und entsprechende Schnittstellen, und ist aus dem Stand der Technik bekannt. Die Speichereinrichtung kann die gespeicherten Daten über beispielsweise Schnittstellen anderen Produktionsmaschinen zur Verfügung stellen. Das Datenformat kann auch in ein für die entsprechende Produktionsmaschine passendes Format gewandelt werden. Die Speichereinrichtung kann jegliche zur Verfügung gestellten Produktdaten, beispielsweise auch die Bebilderungs-, Ausschieß- und Produktstrukturdaten, speichern und bei Bedarf jeder der Produktionseinrichtungen zur Verfügung stellen.

Weiterhin ist bekannt, dass eine der Digitaldruckmaschine nachgelagerte Weiterverarbeitungseinrichtung, z.B. eine Schneide-, Falz-, Klebe-, Stanz-, Sektionier-, Sammel-, Ausschleuß-, und/oder Hefteinrichtung, angesteuert werden muss, um die richtigen Aktionen für jeden Auftrag auszuführen. Bislang erfolgt diese Ansteuerung mittels sogenannter "Marken", welche während des Druckvorgangs auf den einzelnen Druckaufträgen, welche auf dem sogenannten Bedruckstoff gedruckt werden, aufgedruckt werden. Hierbei wird gewöhnlich für jede von der Weiterverarbeitungseinrichtung durchzuführende Aktion eine andere "Marke" benötigt.

Dieses Verfahren hat mehrere Nachteile. Einerseits wird durch den benötigten Platz zum Drucken der Marke mehr Papier und Farbe benötigt, da der Teil des Bedruckstoffs, der die Marke(n) enthält, abgeschnitten werden muss, da der Kunde keine Marke auf dem fertigen Produkt haben möchte. Ferner ist der Automatisierungsgrad des Produktionsprozesses eingeschränkt, da die Weiterverarbeitungsmaschine nicht automatisch an den Datenfluss des Produktionsplanungs- und Produktionssteuerungssystems angebunden werden kann. Das heißt unter anderem, dass Steueraktionen wie z.B. Schneiden, Sammeln, Falzen, Leimen, Kleben, Sektionieren, Perforieren, Ausschleusen etc. in der für jeden Auftrag individuellen Reihenfolge nicht ohne weiteres, d.h. ohne vor dem Druckprozess definierte und dann aufgedruckte Marken, ausgeführt werden können, was den Druckprozess verlangsamt. Ferner ist eine Qualitätskontrolle mittels der Marken nicht möglich.

Das Problem der markenlosen Weiterverarbeitung des Bedruckstoffs nachdem er von der Druckmaschine zur Weiterverarbeitungseinrichtung gelangt ist, wird in der parallel zu dieser Anmeldung eingereichten Anmeldung gelöst. Diese Erfindung löst aber nicht das Problem, wie ohne Verwendung von Marken ein Zwischen-, Teil- oder Endprodukt eines Auftrags möglichst automatisiert überprüft werden kann, welches bereits zumindest einen ersten Verarbeitungsschritt hinter sich hat. Überprüft heißt in diesem Zusammenhang beispielsweise eine Überprüfung, welcher Auftrag an welcher Stelle des Produktionsprozesses zu einem bestimmten Zeitpunkt vorliegt oder vorliegen soll, ob die Qualität des Zwischen-, Teil- oder Endprodukts ausreichend ist oder welcher weitere Schritt für das Zwischen-, Teil- oder Endprodukt vorgesehen ist, sowie die automatische Übergabe an eine weitere Weiterverarbeitungseinrichtung oder eine Logistikeinrichtung. Unter Qualität wird hier sowohl die Qualitätsüberprüfung als auch die Qualitätssicherung verstanden. Genauer wird beispielsweise überprüft, ob ein Produkt nach/vor einem bestimmten Arbeitsschritt so aussieht, wie es gemäß der gespeicherten Produktdaten für den entsprechenden Auftrag und Produktionsschritt aussehen soll, d.h. beispielsweise auch, ob die richtige Reihenfolge der Produktionsschritte eingehalten wurde. Auch wird unter Qualität beispielsweise die Druck- und/oder Falzqualität verstanden. Zwischen-, Teil- und/oder Endprodukt heißt in diesem Zusammenhang, dass der Bedruckstoff nicht mehr als Bahn oder Bogen oder in einem sonstigen aus der Druckmaschine kommenden Format vorliegt, sondern bereits zumindest ein Weiterverarbeitungsschritt erfolgt ist, wie beispielsweise ein Schneiden, Falzen, Sammeln und/oder Heften.

Deshalb ist eine Aufgabe der vorliegenden Erfindung, die oben genannten Probleme zu lösen. Diese Aufgabe wird durch das Verfahren zur Steuerung bzw. Regelung eines Produktionsprozesses bei einer druckformvariablen Produktionseinrichtung gemäß Patentanspruch 1 sowie die Vorrichtung gemäß Patentanspruch 16 gelöst. Weitere vorteilhafte Ausgestaltungen sind in den abhängigen Patentansprüchen offenbart.

Das erfindungsgemäße Verfahren zur Steuerung bzw. Regelung eines Produktionsprozesses bei einer druckformvariablen Produktionseinrichtung, wobei der Produktionsprozess einen oder mehrere Aufträge umfasst, wobei für jeden dieser Aufträge entsprechende Produktdaten für einen oder mehrere Produktionsschritte der Produktionseinrichtung zur Erstellung eines Zwischen-, Teil- oder Endproduktes in einer Speichereinrichtung gespeichert sind.

Der Kern der hier vorliegenden Erfindung ist, ein möglichst automatisiertes Verfahren zur Kontrolle von Zwischen-, Teil- und/oder Endprodukten eines Auftrags während des Produktionsprozesses ohne die Verwendung von Marken zur Verfügung zu stellen. Ein Vorteil einer markenlosen Produktion ist, dass eine Einsparung von Papier und Farbe erfolgt, womit die Produktionskosten gesenkt werden können, sowie ein umweltfreundlicheres Verfahren zur Verfügung gestellt wird. Ferner wird mit einem solchen Verfahren durch das Bereitstellen und Verwenden von gespeicherten Produktdaten, wie beispielsweise Bebilderungs-, Ausschieß- und/oder Produktstrukturdaten, für jeden Druckauftrag ein höherer Automatisierungsgrad erreicht, womit eine flexiblere Produktionsplanung ermöglicht wird, was zu einem schnelleren Produktionsprozess führt. Ferner kann eine Qualitätskontrolle automatisiert werden. Ferner entfällt eine potentielle Fehlerquelle durch falsche Zuordnung von Marke bzw. Code zum jeweiligen Zwischen-, Teil- und/oder Endprodukt.

Eine druckformvariable Produktionseinrichtung gemäß der vorliegenden Erfindung kann sowohl eine Druckmaschine mit einer oder mehreren integrierten Weiterverarbeitungseinrichtungen umfassen, als auch eine Druckmaschine und eine oder weitere modulare, d.h. nicht integrierte, Komponenten, die als Weiterverarbeitungseinrichtungen dienen. Ferner kann die Produktionseinrichtung zusätzlich eine Logistikeinrichtung umfassen, die beispielsweise nach der letzten Weiterverarbeitungseinrichtung positioniert ist. In der Druckmaschine werden eine oder mehrere Bedruckstoffbahnen oder der Bedruckstoffbogen gemäß den vorliegenden Aufträgen, welche in einer Speichereinrichtung gespeichert sind, bedruckt und anschließend zu einer der Weiterverarbeitungseinrichtungen weitergeleitet. Ein Produktionsprozess umfasst dabei mehrere Aufträge. Dabei kann sich jeder Auftrag vom vorhergehenden unterscheiden.

Weiterverarbeitungseinrichtungen gemäß der vorliegenden Erfindung sind alle Einrichtungen, die ein Weiterverarbeiten des aus der Druckmaschine kommenden Bedruckstoffs, sei es als Bedruckstoffbahn oder auch als Bogen oder in jedem anderen möglichen Format, ermöglichen. Dazu zählen unter anderem eine oder mehrere Schneide-, Falz-, Stanz-, Sektionier-, Sammel-, Ausschleuß-, und/oder Hefteinrichtungen oder eine Kombination daraus. Unter Weiterverarbeiten wird jegliche Weiterverarbeitung des aus der Druckmaschine kommenden Bedruckstoffs verstanden, also beispielsweise das Schneiden, Falzen, Sammeln, Leimen, Kleben, Sektionieren, Perforieren, Ausschleusen, Zusammenbringen, Buchblöcke binden und/oder Weiterleiten an die nächste Weiterverarbeitungseinrichtung etc. Nachdem ein oder mehrere Weiterverarbeitungsschritte durchgeführt wurden, liegt ein Zwischen-, Teil- oder Endprodukt für einen Auftrag vor, d.h. der bearbeitete Auftrag ist entweder fertiggestellt oder muss weiter verarbeitet werden. Unter "weiter verarbeitet" wird der jeweils nächste Schritt im Produktionsprozess verstanden, der nötig ist, um den Auftrag abzuschließen. Darunter fallen auch Schritte wie ein Weiterleiten an eine Einrichtung, die nicht mehr zur Produktionseinrichtung gehört, beispielsweise eine Logistikeinrichtung, die den aus der Produktionseinrichtung kommenden Auftrag mit einem in einer anderen Einrichtung bearbeiteten Auftrag zu einem Endprodukt zusammenführt oder fertiggestellte Aufträge sammelt, die dann zum Transport vorbereitet und verschickt werden. Das heißt, dass zu jedem Auftrag nicht nur Informationen bis zur Fertigstellung des Auftrags bereitgestellt, gespeichert und verarbeitet werden können, sondern auch darüber hinaus gehende Informationen, wie beispielsweise Logistikinformationen.

Die Erfassungseinrichtung gemäß der vorliegenden Erfindung kann entweder in bzw. vor mindestens einer nachfolgenden Weiterverarbeitungseinrichtung oder in bzw. direkt hinter der den Produktionsschritt ausführenden Weiterverarbeitungseinrichtung der Produktionseinrichtung integriert sein oder kann modular zur Verfügung gestellt werden. Die Erfassungseinrichtung erfasst zumindest einen Teil des Druckbilds eines zumindest zu einem Teil fertiggestellten Auftrags aus der Produktionseinrichtung, d.h. es wird ein Druckbild eines Auftrags erfasst, bei dem zumindest ein Weiterverarbeitungsschritt durchgeführt wurde, nachdem der Bedruckstoff aus der Druckmaschine in die Weiterverarbeitungseinrichtung gelangt ist, d.h. ein Zwischen-, Teil- oder Endprodukt vorliegt. Das zu erfassende bzw. das erfasste Druckbild unterscheidet sich von dem ursprünglich gedruckten Druckbild, das aus der Druckmaschine in die Weiterverarbeitungseinrichtung gegeben wurde in der Form, dass in Kombination der Produktdaten, insbesondere aus ursprünglichem Druckbild bzw. Druckbilddaten bzw. Bebilderungsdaten, Ausschießschemata, Produktstrukturdaten und dem jeweils bereits durchgeführten (Weiter)-Verarbeitungsschritt nur noch definierbare Teile des ursprünglich auf den Bedruckstoff, beispielsweise die Bahn bzw. den Bogen, gedruckten Druckbildes sichtbar sind, da hier bereits ein Zwischen-, Teil- oder Endprodukt eines Auftrags vorliegt.

Zur Erfassung des noch sichtbaren Teils des Druckbildes eines jeden Auftrags können unterschiedliche Verfahren und Vorrichtungen abhängig von der benutzten Erfassungseinrichtung verwendet werden. So können beispielsweise nur ein oder mehrere vordefinierte Teile des Druckbildes eines Auftrags erfasst werden. Ein solcher Teil kann beispielsweise ein vorbestimmter Bereich sein, der für den entsprechenden Druckauftrag charakteristische Merkmale, z.B. Geometriedaten, aufweist. Es können auch mehrere Bereiche gleichzeitig erfasst werden. Die Bereiche können beispielsweise eine einzelne oder mehrere Bahnen oder Spuren sein oder vordefinierte Bereiche des einzelnen Auftrags oder eine Kombination daraus. Die Bereiche können für jeden Auftrag unterschiedlich sein. Die Erfassung kann mittels eines Sensors oder einer anderen geeigneten Erfassungseinrichtung erfolgen. Das Druckbild kann pixelgenau erfasst werden, oder aber in jeder beliebigen Auflösung, je nachdem, welche Erfassungseinrichtung verwendet wird. Die Erfassung kann auch erfolgen, indem ein Histogramm über mehrere vordefinierte Merkmale erzeugt wird, beispielsweise mittels eines Bild- oder Farbhistogramms, welche aus der digitalen Fotographie bekannt sind. Es können auch ein oder mehrere vorbestimmte Merkmale, wie beispielsweise einzelne Farben oder mehrere Farben, darunter auch weiß und schwarz, erfasst werden. Auch kann eine Kombination aus beispielsweise der Farberfassung für einen Bereich und einer pixelgenauen Erfassung für einen weiteren Bereich erfolgen. Dies kann beispielsweise für ein Erfassen von Buchseiten, die sich hauptsächlich in der Seitennummerierung unterschieden, vorteilhaft sein. Die hier beschriebenen Erfassungsmöglichkeiten sind allerdings nicht beschränkt. Vielmehr kann jedes Verfahren zur Erfassung des Druckbildes verwendet werden, solange es den Anforderungen bezüglich der benötigten Informationen, also z.B. Auflösung, genügt.

Denkbar sind hier beispielsweise auch aus der Bildverarbeitung bekannte Verfahren wie ein Abfotografieren oder ein zeilenweises Abtasten des Druckbildes.

Nachdem die Erfassungseinrichtung das noch verbliebene Druckbild erfasst hat, erfolgt ein Vergleichen des erfassten Druckbildes mit den für jeden Auftrag und jeden Produktionsschritt bekannten und schon für das Drucken gespeicherten Produktdaten, um den zu dem Druckbild zugehörigen Auftrag und das zugehörige Zwischen-, Teil- und/oder Endprodukt zuzuordnen. Der Vergleich wird durch bekannte Vergleichseinrichtungen durchgeführt und ist abhängig davon, wie das Druckbild erfasst wurde. Es kann beispielsweise ein Bild-Bild-Vergleich erfolgen, bei dem das verbleibende Druckbild mit den Bebilderungsdaten in Kombination mit mindestens Ausschießschema und Produktstrukturdaten verglichen wird. Es kann aber auch das Histogramm mit den Bebilderungsdaten in Kombination mit mindestens Ausschießschema und Produktstrukturdaten verglichen werden, wenn diese in demselben Format vorliegen oder in dieses gewandelt werden. Auch ist er Vergleich von der Rechnerleistung und den zu vergleichenden Daten abhängig und wird so gewählt, dass eine hohe Effizienz und die benötigte Genauigkeit erreicht werden.

Nachdem dem jeweiligen erfassten Druckbild das entsprechende Zwischen-, Teil- und/oder Endprodukt und damit der entsprechende Auftrag zugeordnet wurde, werden aus diesem Vergleich eine Kontrolle der bisherigen Bearbeitungsschritte und/oder eine für die Weiterverarbeitung des Auftrags benötigte Berechnung der nachfolgenden Steueraktionen durchgeführt. Die berechneten Steueraktionen werden durch die entsprechende zuständige Weiterverarbeitungseinrichtung ausgeführt.

Das für jeden Prozessschritt eines Auftrags charakteristische Zwischen-, Teil- oder Endprodukt wird aus einer Kombination der bereitgestellten Produktdaten, beispielsweise einer Kombination aus den Bebilderungsdaten bzw. digitalen Druckdaten, dem Ausschießer und/oder den Produktstrukturdaten, eines Auftrags erstellt. Das heißt, dass aufgrund des Zwischen-, Teil- oder Endproduktes zu jedem Zeitpunkt im Prozessablauf bekannt ist, wie der Auftrag an dieser Stelle auszusehen hat. Es ist beispielsweise durch die Produktdaten und das damit bekannte Zwischen-, Teil- oder Endprodukt bekannt, welches Bild bzw. welche Seite des Auftrags z.B. obenauf liegen muss, nachdem ein bestimmter Produktionsschritt ausgeführt wurde. Dies ist möglich, da aus den Produktdaten der Prozessablauf z.B. in der Reihenfolge Drucken, Schneiden, Perforieren, Sammeln, Heften, Ausschleusen bekannt ist und errechnet werden kann, welches Bild beispielsweise nach dem Sammeln obenauf liegen muss, d.h. welches Zwischen-, Teil- oder Endprodukt erwartet wird, damit der nächste Schritt, also das Heften, angesteuert werden kann. Somit kann durch einen Vergleich des erfassten Druckbildes mit den für den entsprechenden Produktionsschritt bereitgestellten Produktdaten und dem daraus resultierenden Zwischen-, Teil- oder Endprodukt der zugehörige Auftrag zugewiesen werden und der Befehl für das Ausführen des weiteren Produktionsschrittes weitergegeben und ausgeführt werden.

Nachfolgende Steueraktionen können jegliche Aktionen sein, die nach Erstellung des Zwischen-, Teil- oder Endproduktes gemäß dem jeweiligen Auftrag anfallen. Dies können beispielsweise weitere Prozess- und/oder Logistik-Schritte sein. Weitere Prozess- und/oder Logistik-Schritte können beispielsweise das Fertigstellen eines Auftrags, das Zusammenführen mehrerer Aufträge, das qualitative oder quantitative Überprüfen des Zwischen-, Teil- oder Endprodukts, sowie das Weiterleiten an eine nachfolgende Einrichtung, wie beispielsweise eine Transporteinrichtung, sowie eine Nachverfolgung umfassen, sind aber nicht auf diese Aufzählung beschränkt.

Ferner wird gemäß der vorliegenden Erfindung eine druckformvariable Vorrichtung bereitgestellt, welche das oben beschriebene Verfahren ausführt. Diese Vorrichtung umfasst zumindest die oben für das Verfahren beschriebenen Einrichtungen, wie beispielsweise eine Druckmaschine, eine Erfassungseinrichtung, eine Speichereinrichtung und eine Weiterverarbeitungseinrichtung. Weitere Einrichtungen, welche benötigt werden, um einen Druckprozess bei einer druckformvariablen Produktionseinrichtung durchzuführen, sind dem Fachmann bekannt und werden hier nicht erwähnt.

Die eine oder mehrere Erfassungseinrichtungen der Vorrichtung können sowohl in oder vor der Weiterverarbeitungseinrichtung positioniert sein, die den nächsten Produktionsschritt durchführt, so dass die Überprüfung des vorhergehenden Produktionsschrittes erst kurz vor der Weiterverarbeitung im nächsten Schritt erfolgt.

Die eine oder mehrere Erfassungseinrichtungen der Vorrichtung können aber auch in oder direkt nach der Weiterverarbeitungseinrichtung positioniert sein, so dass die Überprüfung des durch diese Weiterverarbeitungseinrichtung durchgeführten Produktionsschrittes direkt nach Durchführung des Produktionsschrittes erfolgt.

Ferner kann auch eine Kombination aus den vorher genannten Möglichkeiten der Positionierung der Erfassungseinrichtung erfolgen.

Die Positionierung der Erfassungseinrichtung ist von unterschiedlichen Faktoren abhängig. Solche Faktoren können beispielsweise sein: Platzgründe bei der Aufstellung der Produktionseinrichtung, Kundenwünsche, Anforderungen des Produktionsprozesses etc..

Die Anordnung der Erfassungseinrichtung vor bzw. in der Weiterverarbeitungseinrichtung ist vorteilhaft, wenn der vorangegangene Produktionsschritt z.B. qualitätskritisch ist und ein (längerer) Transport zur nächsten Weiterverarbeitungseinrichtung erfolgen muss, so dass die Kontrolle vorteilhafterweise erst nach dem Transport erfolgt, um Qualitätsminderung durch den Transport auszuschließen.

Die Anordnung der Erfassungseinrichtung in bzw. nach der Weiterverarbeitungseinrichtung ist vorteilhaft, wenn die Weiterverarbeitungseinrichtung z.B. die letzte Bearbeitungseinrichtung ist, da hier sofort nach Abschluss des Produktionsschrittes eine Kontrolle erfolgen kann, oder die Erfassungseinrichtung mit der Weiterverarbeitungseinrichtung in eine Einrichtung kombiniert ist.

Ferner ist es innerhalb einer Produktionseinrichtung nicht festgelegt, dass jede der Erfassungseinrichtungen in, vor oder hinter der jeweiligen Weiterverarbeitungseinrichtung positioniert ist. Vielmehr ist es beispielsweise möglich, dass bei einer Weiterverarbeitungseinrichtung die Erfassungseinrichtung in bzw. vor dieser positioniert ist, um den vorhergehenden Produktionsschritt zu erfassen und zu kontrollieren, und eine weitere Erfassungseinrichtung in bzw. hinter derselben Weiterverarbeitungseinrichtung positioniert ist, um den dort durchgeführten Produktionsschritt zu erfassen und zu kontrollieren. Dies kann für alle Weiterverarbeitungseinrichtungen einer Produktionseinrichtung gelten, ist aber nicht darauf festgelegt. Vielmehr kann jede einzelne Weiterverarbeitungseinrichtung entsprechend den Bedürfnissen der Produktion beschaffen sein.

Nachstehend ist die Erfindung anhand der beigefügten Zeichnung, welche lediglich ein Ausführungsbeispiel darstellt, näher erläutert.

Es zeigen:
- Figur 1 einen prinzipiellen Aufbau einer Produktionseinrichtung mit einer Druckmaschine mit mehreren integrierten Weiterverarbeitungseinrichtungen und einer nach jeder der Weiterverarbeitungseinrichtungen positionierten Erfassungseinrichtung.
- Figur 2 einen prinzipiellen Aufbau einer Produktionseinrichtung mit mehreren integrierten Weiterverarbeitungseinrichtungen und einer vor jeder der Weiterverarbeitungseinrichtungen positionierten Erfassungseinrichtung.
- Figur 3 einen prinzipiellen Aufbau einer Produktionseinrichtung mit mehreren integrierten Weiterverarbeitungseinrichtungen, wobei bei einer der Weiterverarbeitungseinrichtungen eine Erfassungseinrichtung vor und eine Erfassungseinrichtung nach dieser Weiterverarbeitungseinrichtung positioniert ist, und bei den weiteren Weiterverarbeitungseinrichtungen die Erfassungseinrichtungen nach der jeweiligen Weiterverarbeitungseinrichtung positioniert ist.
- Figur 4 mögliche zu erfassende Bereiche eines Druckbildes Zwischen-, Teil- oder Endproduktes.

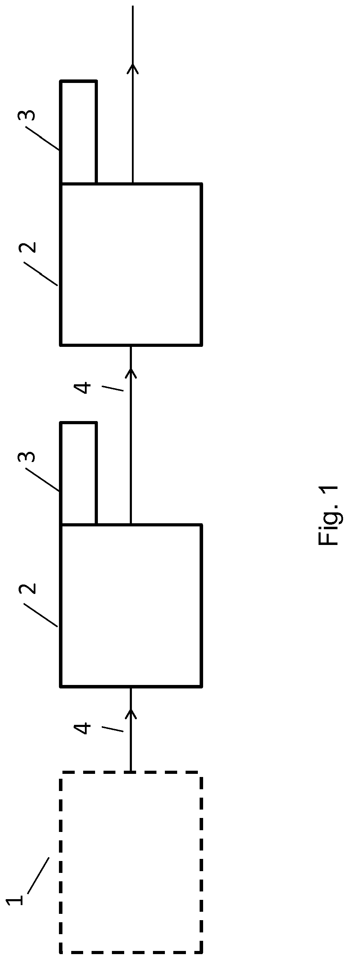

Dargestellt und beschrieben ist mit Bezug zu Figur 1 beispielhaft eine Produktionseinrichtung mit einer Druckmaschine 1 mit zwei integrierten Weiterverarbeitungseinrichtungen 2. Ferner zeigt Figur 1 eine nach jeder der Weiterverarbeitungseinrichtungen 2 angeordnete Erfassungseinrichtung 3, die ein Druckbild eines Zwischen-, Teil- oder Endproduktes wie oben beschrieben erfasst, so dass es mit den gespeicherten Produktdaten mit dem jeweiligen durchgeführten Produktionsschritt verglichen werden kann und dann die oben beschriebene Kontrolle und/oder Berechnung der weiteren Steueraktionen erfolgen kann.

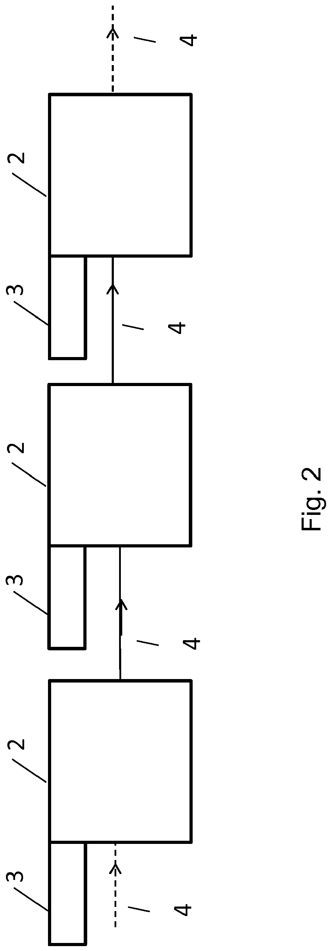

Dargestellt und beschrieben ist mit Bezug zu Figur 2 beispielhaft ein Ausschnitt aus einer Produktionseinrichtung, bei der vor jeder der Weiterverarbeitungseinrichtungen 2 eine Erfassungseinrichtung 3 positioniert ist, die ein Druckbild eines Zwischen-, Teil- oder Endproduktes wie oben beschrieben erfasst, so dass es mit den gespeicherten Produktdaten zu dem jeweiligen durchgeführten Produktionsschritt verglichen werden kann und dann die oben beschriebene Kontrolle und/oder Berechnung der weiteren Steueraktionen erfolgen kann.

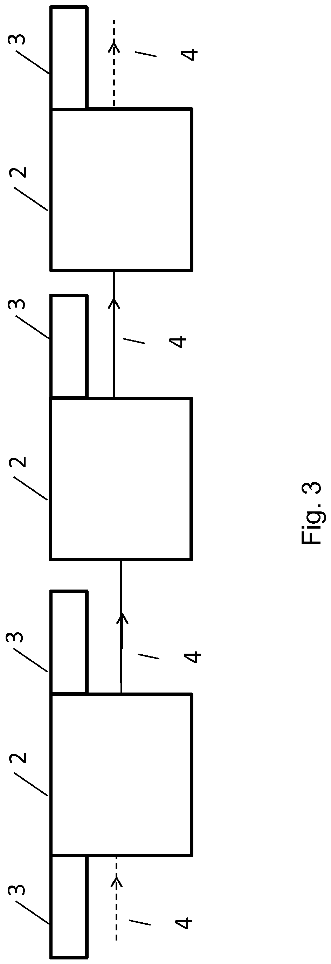

Dargestellt und beschrieben ist mit Bezug zu Figur 3 beispielhaft ein Ausschnitt aus einer Produktionseinrichtung, bei der die Produktionseinrichtung derart aufgebaut ist, dass zumindest bei einer der Weiterverarbeitungseinrichtungen 2 eine Erfassungseinrichtung 3 vor und eine Erfassungseinrichtung 3 hinter einer der Weiterverarbeitungseinrichtungen 2 positioniert ist, und bei weiteren Weiterverarbeitungseinrichtungen 2 die Erfassungseinrichtung 3 hinter der jeweiligen Weiterverarbeitungseinrichtung 2 positioniert ist, so dass ein Druckbild eines Zwischen-, Teil- oder Endproduktes wie oben beschrieben erfasst werden kann.

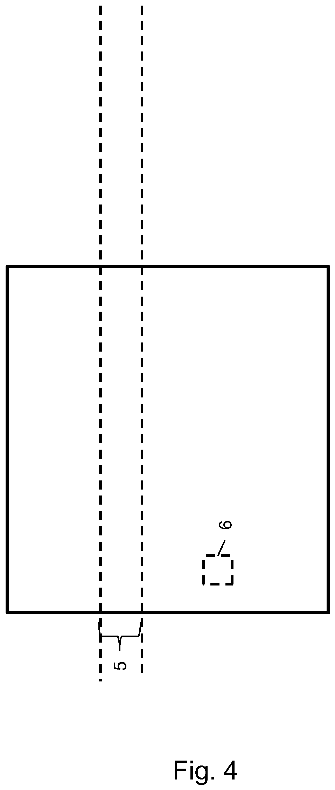

Figur 4 zeigt eine beispielhafte Ansicht möglicher zu erfassender Druckbereiche. Es können einzelne Bahnen 5 oder vorbestimmte Bereiche 6 eines Druckbildes eines Auftrags, oder eine Kombination daraus, beispielsweise Bereiche, in denen Seitenzahlen oder andere charakteristische Merkmale vorhanden sind, erfasst werden. Diese Erfassung erfolgt vorzugsweise hochauflösend, möglichst pixelgenau, da hier ein Erfassen des Bildinhaltes gewünscht ist, um eine eindeutige Zuordnung zu erzielen. In dem hier gezeigten Beispiel erfolgt die Erfassung nur auf einer Seite des Zwischen-, Teil- oder Endproduktes. Dies ist aber nicht beschränkt. Vielmehr kann eine Erfassung auch auf einer oder mehreren Seiten erfolgen.
Die Erfindung überwindet die anfangs beschriebenen Nachteile durch das Bereitstellen des oben beschriebenen Verfahrens sowie einer Vorrichtung zum markenlosen Erfassen eines Druckbildes. Weitere Vorteile sind die Möglichkeit, durch die Verwendung einer Erfassungseinrichtung eine Qualitätskontrolle des resultierenden Produkts bereits in der Produktionseinrichtung durchzuführen, sowie beispielsweise eine Vollständigkeitsprüfung durchzuführen oder ein Erkennen von Ausschüssen zu erreichen, sowie ein automatisiertes Weiterleiten und Verarbeiten an bzw. in nachfolgende(n) Logistikprozesse(n) bereitzustellen.

### Bezugszeichenliste

- 1: Druckmaschine
- 2: Weiterverarbeitungseinrichtung
- 3: Erfassungseinrichtung
- 4: Papierbahnen bzw. Papierbögen
- 5: einzelne Bahnen
- 6: vorbestimmte Bereiche

## Patentansprüche

1. Verfahren zur Steuerung bzw. Regelung eines Produktionsprozesses bei einer Digitaldruckmaschine mit mindestens einer Weiterverarbeitungseinrichtung ohne vor dem Druckprozess definierte und aufgedruckte Marken oder Codes, wobei der Produktionsprozess einen oder mehrere Aufträge umfasst, wobei für jeden dieser Aufträge entsprechende Produktdaten für einen oder mehrere Produktionsschritte der Produktionseinrichtung zur Erstellung eines Zwischen-, Teil- oder Endproduktes in einer Speichereinrichtung gespeichert sind, wobei Produktdaten Bebilderungsdaten, Ausschießschemata und/oder Produktstrukturdaten umfassen und wobei das Verfahren die folgenden Schritte umfasst:
a. Erfassen mittels einer Erfassungseinrichtung eines Druckbilds eines Zwischen-, Teil- oder Endproduktes eines Auftrages nach zumindest einem vorgegebenen Produktionsschritt der Produktionseinrichtung,
b. Vergleichen des erfassten Druckbilds mit den für jeden Auftrag und zu dem vorgegebenen Produktionsschritt gespeicherten Produktdaten, um den zugehörigen Auftrag und das zugehörige Zwischen-, Teil- oder Endprodukt zu dem erfassten Druckbild zuzuordnen,
c. Basierend auf dem Vergleich Durchführung der Kontrolle der bisherigen Bearbeitungs- bzw. Produktionsschritte und/oder Berechnung der nachfolgenden Steueraktionen für den zu dem Zwischen-, Teil- oder Endprodukt zugeordneten Auftrag,
d. Ausführen der Steueraktionen durch die Produktionseinrichtung.

2. Verfahren nach Anspruch 1, wobei die Produktstrukturdaten Informationen über den logischen Aufbau, den Inhalt, Personalisierungen des Produktes, sowie Logistikinformationen und kaufmännische Informationen gemäß jedem Auftrag umfassen.

3. Verfahren nach einem der Ansprüche 1 bis 2, wobei das Zwischen-, Teil- oder Endprodukt für jeden Auftrag aus einer Kombination der Produktdaten jedes Auftrags erstellt wird.

4. Verfahren nach einem der vorhergehenden Ansprüche, wobei das gesamte, abhängig vom jeweils bereits durchgeführten Prozessschritt sichtbare Druckbild erfasst wird.

5. Verfahren nach einem der vorhergehenden Ansprüche, wobei zumindest eine vorbestimmte Spur des abhängig vom jeweiligen Prozessschritt noch sichtbaren Druckbilds erfasst wird.

6. Verfahren nach einem der vorhergehenden Ansprüche, wobei die Erfassung auf zumindest einer Seite des Zwischen-, Teil- oder Endproduktes erfolgt.

7. Verfahren nach einem der vorhergehenden Ansprüche, wobei die Erfassung mittels eines Sensors erfolgt.

8. Verfahren nach einem der vorhergehenden Ansprüche, wobei das Druckbild pixelgenau erfasst wird.

9. Verfahren nach einem der vorhergehenden Ansprüche, wobei das Druckbild so erfasst wird, dass wesentliche Geometriemerkmale erfasst werden.

10. Verfahren nach einem der vorhergehenden Ansprüche, wobei das Druckbild so erfasst wird, dass ein Histogramm über ein oder mehrere vorbestimmte Merkmale erzeugt wird.

11. Verfahren nach Anspruch 10, wobei ein oder mehrere vorbestimmte Merkmale die Farben weiß, schwarz, blau, gelb, rot und/oder grün umfassen.

12. Verfahren nach Anspruch 10 oder 11, wobei zusätzlich eine pixelgenaue Erfassung eines weiteren Merkmals des Druckbildes erfolgt.

13. Verfahren nach einem der vorhergehenden Ansprüche, wobei Steueraktionen ein Durchführen von nachfolgenden Prozess- und/oder Logistikschritten umfasst.

14. Verfahren nach Anspruch 13, wobei das Durchführen von nachfolgenden Prozess- und/oder Logistikschritten ein Fertigstellen des Auftrages, ein Zusammenführen mehrerer Aufträge, ein qualitatives oder quantitatives Überprüfen des Auftrags, ein Weiterleiten an eine nachfolgende Einrichtung wie eine Transporteinrichtung, sowie eine Nachverfolgung umfassen.

15. Digitaldruckmaschine mit mindestens einer Weiterverarbeitungseinrichtung, wobei diese eine Erfassungseinrichtung und eine Speichereinrichtung umfasst, und wobei die Speichereinrichtung für jeden der zu bearbeitenden Aufträge entsprechende Produktdaten für einen oder mehrere Produktionsschritte der Produktionseinrichtung zur Erstellung eines Zwischen-, Teil- oder Endproduktes speichert, und wobei die Digitaldruckmaschine mit mindestens einer Weiterverarbeitungseinrichtung das Verfahren gemäß einem der vorhergehenden Ansprüche ausführt.

16. Digitaldruckmaschine mit mindestens einer Weiterverarbeitungseinrichtung nach Anspruch 15, wobei zumindest eine Erfassungseinrichtung in und/oder vor und/oder hinter einer Weiterverarbeitungseinrichtung angeordnet ist.

## Claims

1. A method for controlling or regulating, respectively, a production process in a digital printing press comprising at least one further processing device without marks or codes, which are defined and imprinted prior to the printing process, wherein the production process comprises one or a plurality of jobs, wherein corresponding product data for one or a plurality of production steps of the production device for each of these jobs is stored in a storage device for creating an intermediate, partial or finished product, wherein product data comprise imaging data, imposition schemes and/or product structure data and wherein the method comprise the following steps:
a. capturing a print image of an intermediate, partial or finished product of an order by means of a capturing device after at least one predetermined production step of the production device,
b. comparing the captured print image to the product data stored for each job and with respect to the predetermined production step in order to assign the corresponding job and the corresponding intermediate, partial or finished product to the captured print image,
c. based on the comparison, performing the inspection of the previous processing or production steps, respectively, and/or a calculation of the following control actions for the job assigned to the intermediate, partial or finished product,
d. carrying out the control actions by the production device.

2. The method according to claim 1, wherein the product structure data comprises information relating to the logical design, the content, personalizations of the product, as well as logistics information and commercial information according to each job.

3. The method according to one of claims 1 to 2, wherein the intermediate, partial or finished product for each job is created from a combination of the product data of each job.

4. The method according to one of the preceding claims, wherein the entire print image, which is visible as a function of the respective process step, which has already been performed, is captured.

5. The method according to one of the preceding claims, wherein at least one predetermined track of the print image, which is still visible as a function of the respective process step, is captured.

6. The method according to one of the preceding claims, wherein the capturing takes place on at least one side of the intermediate, partial or finished product.

7. The method according to one of the preceding claims, wherein the capturing takes place by means of a sensor.

8. The method according to one of the preceding claims, wherein the print image is captured in a pixel-accurate manner.

9. The method according to one of the preceding claims, wherein the print image is captured in such a way that significant geometry features are captured.

10. The method according to one of the preceding claims, wherein the print image is captured in such a way that a histogram regarding one or a plurality of predefined features is generated.

11. The method according to claim 10, wherein one or a plurality of predetermined features comprise the colors white, black, blue, yellow, red and/or green.

12. The method according to claim 10 or 11, wherein a pixel-accurate capturing of a further feature of the print image additionally takes place.

13. The method according to one of the preceding claims, wherein control actions comprises a performing of following process and/or logistics steps.

14. The method according to claim 13, wherein the performing of following process and/or logistics steps comprise a completion of the job, a combining of a plurality of jobs, a qualitative or quantitative checking of the job, a transfer to a following device, such as a transport device, as well as a tracking.

15. A digital printing press comprising at least one further processing device, wherein the latter comprises a capturing device and a storage device, and wherein the storage device stores corresponding product data for one or a plurality of production steps of the production device for each of the jobs to be processed, for creating an intermediate, partial or finished product, and wherein the digital printing press carries out the method according to one of the preceding claims by means of at least one further processing device.

16. The digital printing press comprising at least one further processing device according to claim 15, wherein at least one capturing device is arranged in and/or upstream of and/or downstream from a further processing device.

## Revendications

1. Procédé de commande ou de réglage d'un processus de production d'une machine d'impression numérique comportant au moins un dispositif de traitement ultérieur sans marques ou codes définis et imprimés avant le processus d'impression, le processus de production comprenant une plusieurs commandes, des données de production correspondantes étant enregistrées pour chacune de ces commandes pour une ou plusieurs étapes de production du dispositif de production pour créer un produit intermédiaire, partiel ou final dans un dispositif de mémoire, les données du produit comprenant des données d'illustration, des données de mise au rebut et/ou des données de structure de produit et le procédé comprenant les étapes suivantes :
a. détection au moyen d'un dispositif de détection d'une image d'impression d'un produit intermédiaire, partiel ou final d'une commande après au moins une étape de production prédéfinie du dispositif de production,
b. comparaison de l'image d'impression détectée avec les données de produits enregistrées pour chaque commande et pour l'étape de production prédéfinie afin d'associer la commande corrélative et le produit intermédiaire, partiel ou final corrélatif à l'image d'impression détectée,
c. en se basant sur la comparaison, réalisation du contrôle des étapes de traitement ou de production déjà effectuées et/ou calcul des actions de commande suivantes pour la commande associée au produit intermédiaire, partiel ou final,
d. exécution des actions de commande par le dispositif de production.

2. Procédé selon la revendication 1, dans lequel les données de structures de produits contiennent des informations sur la structure logique, le contenu, les personnalisations du produit, de même que des informations logistiques et des informations commerciales d'après chaque commande.

3. Procédé selon une des revendications 1 à 2, dans lequel le produit intermédiaire, partiel ou final est réalisé pour chaque commande à partir d'une combinaison des données de produits de chaque commande.

4. Procédé selon une des revendications précédentes, dans lequel l'ensemble de l'image d'impression visible est réalisé en fonction de l'étape de traitement respectivement déjà réalisée.

5. Procédé selon une des revendications précédentes, dans lequel au moins une trace prédéfinie de l'image d'impression visible réalisée en fonction de l'étape de traitement respective est détectée.

6. Procédé selon une des revendications précédentes, dans lequel la détection a lieu sur au moins une face du produit intermédiaire, partiel ou final.

7. Procédé selon une des revendications précédentes, dans lequel la détection est effectuée au moyen d'un capteur.

8. Procédé selon une des revendications précédentes, dans lequel l'image d'impression est détectée au pixel près.

9. Procédé selon une des revendications précédentes, dans lequel l'image d'impression est détectée de manière à enregistrer des caractéristiques géométriques essentielles.

10. Procédé selon une des revendications précédentes, dans lequel l'image d'impression set détectée de manière à créer un histogramme sur une ou plusieurs caractéristiques prédéfinies.

11. Procédé selon la revendication 10, dans lequel une ou plusieurs caractéristiques prédéfinies comprennent les couleurs blanc, noir, bleu, jaune, rouge et/ou vert.

12. Procédé selon la revendication 10 ou 11, dans lequel une détection au pixel près d'une autre caractéristique de l'image d'impression est effectuée en complément.

13. Procédé selon une des revendications précédentes, dans lequel les actions de commande comprennent une réalisation d'étapes de traitement et/logistiques suivantes.

14. Procédé selon la revendication 13, dans lequel la réalisation des étapes de traitement et/logistiques suivantes comprend une finalisation de la commande, le regroupement de plusieurs commandes, un contrôle qualitatif ou quantitatif de la commande, une retransmission à un dispositif suivant comme un dispositif de transport, de même qu'un suivi.

15. Machine d'impression numérique comportant au moins un dispositif de traitement ultérieur, ce dernier comprenant un dispositif de détection et un dispositif de sauvegarde et le dispositif de sauvegarde sauvegardant des données de produits correspondant aux commandes à traiter pour une ou plusieurs étapes de production du dispositif de production afin de créer un produit intermédiaire, partiel ou final et la machine d'impression numérique réalisant au moyen d'au moins un dispositif de traitement ultérieur le procédé selon une des revendications précédentes.

16. Machine d'impression numérique comportant au moins un dispositif de traitement ultérieur selon la revendication 15, dans laquelle au moins un dispositif de détection est disposé dans et/ou en amont et/ou en aval d'un dispositif de traitement ultérieur.
